# FASCICULE DE BREVET EUROPEEN

(11) **EP 3 022 409 B1**
(45) Date de publication et mention de la délivrance du brevet: **30.08.2017**
(21) Numéro de dépôt: 14744014.3
(22) Date de dépôt: 17.07.2014
(51) Int. Cl.: F01K 25/08

(54) **INSTALLATION THERMIQUE DE COMBUSTION DE BIOMASSE EN COGÉNÉRATION, ET PROCÉDÉ DE TRANSFERT THERMIQUE**
KRAFT-WÄRME ANLAGE ZUR BIOMASSEVERBRENNUNG, UND WÄRMEAUSTAUSCHVERFAHREN
THERMAL PLANT FOR THE COMBUSTION OF BIOMASS IN COGENERATION, AND METHOD OF HEAT TRANSFER

(30) Priorité: 17.07.2013 FR 1357015
(43) Date de publication de la demande: 25.05.2016
(73) Titulaire: Electricité de France, 75008 Paris (FR)
(72) Inventeur: ROUSSEAU, Jean-Jacques, F-83370 Saint Aygulf (FR)
(74) Mandataire: Regimbeau
(86) Numéro de dépôt international: PCT/EP2014/065354
(87) Numéro de publication internationale: WO 2015/007831

(56) Documents cités:
- EP-A1- 1 555 396
- WO-A1-2013/050803
- WO-A2-2012/089826
- DE-U1-202005 018 849
- FR-A1- 2 983 901

## Description

### DOMAINE TECHNIQUE GENERAL

La présente invention concerne une installation thermique de combustion de biomasse fonctionnant en cogénération.

### ETAT DE L'ART

Le terme de biomasse désigne l'ensemble des matières organiques d'origine végétale, animale ou fongique (par exemple la sciure) pouvant devenir source d'énergie par combustion, éventuellement après méthanisation ou après de nouvelles transformations chimiques.

Bien que la combustion de biomasse s'accompagne comme pour les énergies fossiles de libération de carbone, celui-ci a récemment été extrait de l'atmosphère par la photosynthèse, alors que ce processus a eu lieu il y a des millions d'années pour les ressources fossiles. C'est pourquoi l'énergie tirée de la biomasse est considérée comme une énergie renouvelable (à condition toutefois que la biomasse soit d'origine locale sous peine de rejeter du carbone fossile via le carburant de camions). La biomasse est d'ailleurs aujourd'hui la première énergie renouvelable en France, et de loin.

Les installations les plus performantes de combustion de biomasse présentent un fonctionnement en « cogénération », avec une production simultanée de chaleur et d'électricité propre. De telles installations ont un rendement global nettement supérieur à celles qui ne produisent que de l'électricité. Les documents WO-2013/050803-A et DE 20 2005 018 849 U décrivent de telles installations. Le contexte réglementaire et les objectifs fixés par le Gouvernement et l'Europe imposent un développement des Energies Renouvelables tant dans le mix énergétique chaleur-électricité que dans l'électricité produite à partir de biomasse.

Et on constate que cet objectif ne peut être atteint à ce jour que via de très grosses installations, qui mobilisent des ressources biomasse telles que la forêt locale peut ne suffire.

La cogénération biomasse « à petite échelle » reste en effet limitée par un certain nombre de difficultés :
1. Un cout d'investissement élevé,
2. Des rendements globaux de production encore assez faibles (65-75%),
3. Des rendements de production électriques nets de l'ordre de 30% pour les grosses unités mais inférieur à 20% pour les unités plus modestes (générant moins de 3MW électrique).

De plus, le décret de loi du 27 janvier 2011 ne permet le rachat à un tarif intéressant de l'électricité produite à partir de biomasse que dans les cas suivants :
1. Production d'électricité supérieure à 5MWé en règle générale,
2. Production d'électricité supérieure à 1 MW pour les scieurs bénéficiant du code NAF1610A.

Et le prix de rachat de l'électricité est fonction de l'efficacité énergétique (EE) qui doit être supérieure à 50% (EE= (Energie électrique produite - Energie électrique consommée + Chaleur produite) / Pouvoir Calorifique Inférieur de la biomasse entrante),

Tout cela fait qu'il n'existe pas d'équilibre économique satisfaisant avec les techniques actuellement disponibles pour les petites installations (<3MWé).

Au-delà des scieurs - aujourd'hui seuls impactés par la réglementation et dont le marché peut être estimé à une centaine d'installations - il serait souhaitable de disposer d'un modèle d'installation de combustion de biomasse de petite puissance qui soit hautement performant, et ainsi probant financièrement.

### PRESENTATION DE L'INVENTION

L'invention propose de pallier ces inconvénients en proposant selon un premier aspect une installation thermique de combustion de biomasse comprenant :
- une chaudière,
- un circuit d'évacuation des fumées en échange thermique avec un circuit de valorisation d'eau chaude au niveau d'un condenseur de fumées ;
- un circuit d'huile thermique en échange thermique avec le circuit d'évacuation des fumées au niveau d'au moins un échangeur primaire en amont du condenseur de fumées ;
- un circuit de fluide caloporteur organique à changement d'état sur lequel sont disposés successivement :
   ∘ un évaporateur en échange thermique avec le circuit d'huile thermique ;
   ∘ au moins une turbine principale entraînant des moyens de génération d'électricité ;
   ∘ un condenseur ; et
   ∘ une pompe ;
l'installation étant caractérisée en ce qu'elle comprend en outre un circuit d'air sur lequel sont disposés successivement :
- un compresseur ;
- au moins un échangeur secondaire en échange thermique avec le circuit d'évacuation des fumées en amont dudit échangeur primaire ;
- une turbine auxiliaire entrainant également des moyens de génération d'électricité ;
l'air en sortie de la turbine auxiliaire étant injecté dans le circuit d'évacuation des fumées en aval dudit échangeur primaire.

Le dispositif selon l'invention est avantageusement complété par les caractéristiques suivantes, prises seules ou en une quelconque de leur combinaison techniquement possible :
- le condenseur met en échange thermique le circuit de fluide caloporteur organique avec le circuit de valorisation d'eau chaude en aval du condenseur de fumées selon le circuit de valorisation d'eau chaude;
- ledit échangeur primaire est un échangeur haute température, le circuit d'huile thermique étant en outre en échange thermique avec le circuit d'évacuation des fumées au niveau d'au moins un échangeur primaire basse température via lequel l'huile thermique est préchauffée avant de circuler dans l'échangeur primaire haute température, l'air en sortie de la turbine auxiliaire étant injecté dans le circuit d'évacuation des fumées en amont de l'au moins un échangeur primaire basse température ;
- le circuit d'évacuation des fumées comprend successivement une première colonne et une deuxième colonne, les fumées en sortie de la chaudière étant injectées au sommet de la première colonne, l'air en sortie de la turbine auxiliaire étant injecté au niveau du sommet de la deuxième colonne, l'au moins un échangeur secondaire et l'échangeur primaire haute température étant disposés dans la première colonne , et les échangeurs primaires basse température étant disposés dans la deuxième colonne ;
- l'installation comprend deux échangeurs secondaires montés en série, et trois échangeurs primaires basse température montés en série ;
- des moyens de traitement des fumées sont disposés sur le circuit d'évacuation des fumées en entrée du condenseur de fumées ;
- le condenseur de fumées comprend un conduit dans lequel les condensats sont refroidis par échange thermique avec l'eau du circuit de valorisation, et pulvérisés au contact des fumées traitées ;
- la chaudière comprend un diverteur configuré pour permettre un échappement en cas de température des fumées en sortie de la chaudière localement supérieure à la température maximale admissible en entrée des dits échangeurs secondaires, typiquement 1000 °C et un ventilateur d'air de combustion configuré pour que les fumées en sortie de la chaudière présentent une température d'au moins 900°C ;
- le compresseur et l'au moins un échangeur secondaire sont configurés pour porter l'air chaud du circuit à une température d'au moins 800°C ;
- l'eau du circuit de valorisation d'eau chaude présente une température inférieure à 50°C en entrée du condenseur de fumées ;
- l'installation est configurée pour une production électrique d'une puissance inférieure à 3 MWé.

Selon un deuxième aspect, l'invention concerne un procédé de transfert thermique mis en oeuvre par une installation thermique de combustion de biomasse, le procédé étant caractérisé en ce qu'il comprend des étapes de :
- Récupération, au niveau d'un circuit d'évacuation de fumées, de fumées de combustion à une température d'au moins 900°C,
- Chauffage à une température d'au moins 800°C d'air d'un circuit d'air en échange thermique avec le circuit d'évacuation des fumées au niveau d'au moins un échangeur secondaire ;
- Détente de l'air chaud du circuit d'air dans une turbine auxiliaire ;
- Chauffage à une température d'au moins 300°C d'huile d'un circuit d'huile thermique en échange thermique avec le circuit d'évacuation des fumées au niveau d'au moins un échangeur primaire en aval de l'au moins un échangeur secondaire ;
- Injection de l'air en sortie de la turbine auxiliaire dans le circuit d'évacuation des fumées en en aval de l'au moins un échangeur primaire ;
- Evaporation de fluide d'un circuit de fluide caloporteur organique à changement d'état en échange thermique avec le circuit d'huile thermique au niveau d'au moins un évaporateur ;
- Détente du fluide gazeux du circuit de fluide caloporteur organique dans une turbine principale ;
- Condensation des fumées du circuit d'évacuation des fumées au niveau d'un condenseur de fumées en échange thermique avec un circuit de valorisation d'eau chaude.

Selon des caractéristiques avantageuses :
- Le procédé comprend en outre une étape de :
   - Condensation du fluide gazeux du circuit de fluide caloporteur organique au niveau d'un condenseur en échange thermique avec le circuit de valorisation d'eau chaude après condensation des fumées du circuit d'évacuation des fumées au niveau du condenseur de fumées.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 est un schéma d'un mode de réalisation préféré de l'installation selon l'invention ;
- la figure 2 est un schéma d'une chaudière d'une installation selon l'invention ;
- la figure 3 est un schéma d'un ORC d'une installation selon l'invention ;
- la figure 4 est un schéma d'un ensemble à air chaud d'une installation selon l'invention ;
- la figure 5 est un schéma d'une portion d'un conduit d'évacuation des fumées d'une installation selon l'invention ;
- la figure 6 est un schéma des moyens de traitement des fumées d'une installation selon l'invention ;
- la figure 7 est un schéma d'un condenseur de fumées d'une installation selon l'invention ;
- la figure 8 est un graphique représentant le volume d'eau condensable dans les fumées par MWth de combustible en fonction de la température de la source froide.

Sur les différentes figures, les éléments similaires portent les mêmes références numériques, et les valeurs de températures indiquées sont uniquement à titre d'exemple non limitatif.

### DESCRIPTION DETAILLEE

### Architecture générale

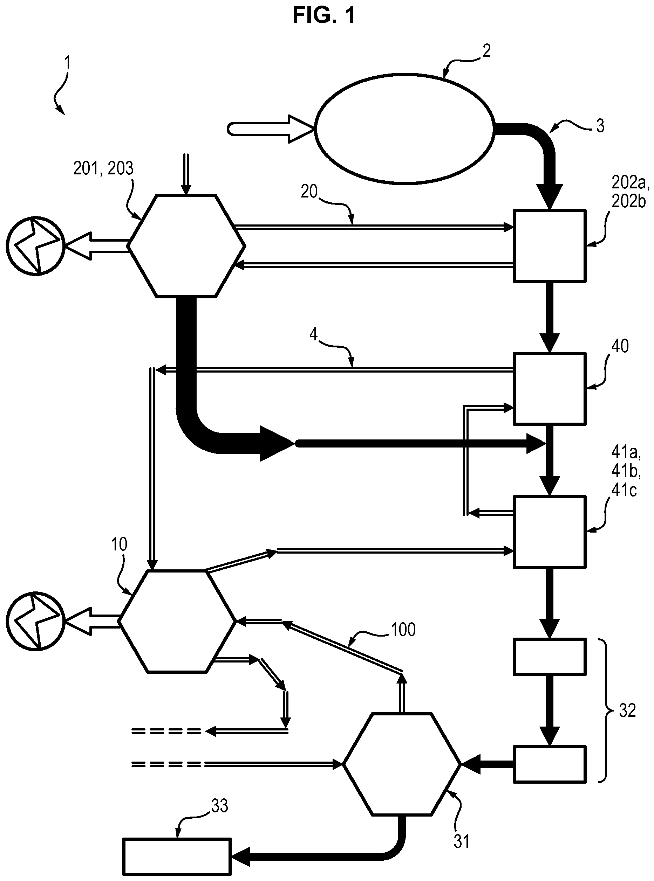

La **figure 1** représente l'architecture générale de l'installation 1 selon l'invention. Cette installation met classiquement en oeuvre un cycle thermodynamique du type « Rankine » pour produire de l'électricité.

Un tel cycle comprend la vaporisation d'un fluide caloporteur, sa détente, sa condensation et enfin sa compression avant une nouvelle vaporisation. L'énergie mécanique fournie lors de la détente est valorisée en électricité.

Ici, le cycle est plus précisément de type « Organic Rankine Cycle » (ORC, en français « Cycle de Rankine Organique »), comme l'on verra en détail plus loin. Le fluide qui subit ce cycle circule dans le circuit 10.

Ce circuit 10 de fluide caloporteur est chauffé via un circuit d'huile thermique 4, lui-même chauffé via les fumées de combustion issues d'une chaudière 2 dans laquelle la biomasse est incinérée.

Les fumées de combustion s'échappent via un circuit d'évacuation des fumées 3, terminé par une cheminée 33. Les fumées, encore chaudes après échange thermique avec le circuit d'huile thermique 4 sont chargées de vapeur d'eau dont l'énergie latente est élevée, et ce d'autant plus que le combustible est de la biomasse. En effet, les végétaux, et typiquement le bois contiennent beaucoup d'humidité. Si ce dernier n'a pas été séché via un séchoir, il contient environ 50% d'eau, qui sera évaporée en consommant une partie de l'énergie de combustion.

Un condenseur de fumées 31 situé juste avant la cheminée 33 met en contact une source froide constituée par un circuit de valorisation d'eau chaude 100 de façon à permettre la condensation de la totalité des fumées dans le condenseur 31, et le transfert au circuit 100 de la chaleur latente de la vapeur d'eau avec la chaleur sensible restante dans les fumées. L'énergie consommée pour évaporer l'eau contenue dans le bois est ainsi récupérée.

L'eau de valorisation ainsi chauffée est utilisée, par exemple pour des applications domestiques (chauffage de bâtiments, eau chaude sanitaire, etc.).

La présente installation 1 se distingue en particulier en la présence d'un circuit d'air 20 qui permet de maximiser la production d'électricité via une turbine auxiliaire à air chaud 203.

Comme expliqué précédemment, les installations de cogénération ont des rendements globaux bien supérieurs à ceux des installations uniquement électriques car moins d'énergie est rejetée à l'atmosphère. Mais l'augmentation du rendement global grâce à la cogénération se traduit par une baisse du rendement électrique, la chaleur représentant alors la majorité de l'énergie récupérée (à titre d'exemple, là où une petite installation de production d'électricité seule présente un rendement électrique typique de 20%, une installation à cogénération de taille équivalente va présenter un rendement total de 80% dont 15% électriques).

Or, l'électricité est une énergie à « haute valeur ajoutée ». En d'autres termes, 1 kWé se valorise beaucoup plus cher que 1 kWth.

En maximisant la production électrique, la rentabilité financière de l'installation augmente fortement.

On va à présent décrire un mode de réalisation particulièrement préféré de chacun des éléments qui composent la présente installation 1, et voir comment l'utilisation du circuit d'air 20 permet d'augmenter la production électrique sans diminuer la production de chaleur.

On notera que la présente installation 1 est préférentiellement une « petite » installation, en d'autre termes produisant une puissance électrique inférieure à 5MWé, avantageusement comprise entre 1 et 3 MWé.

### Chaudière

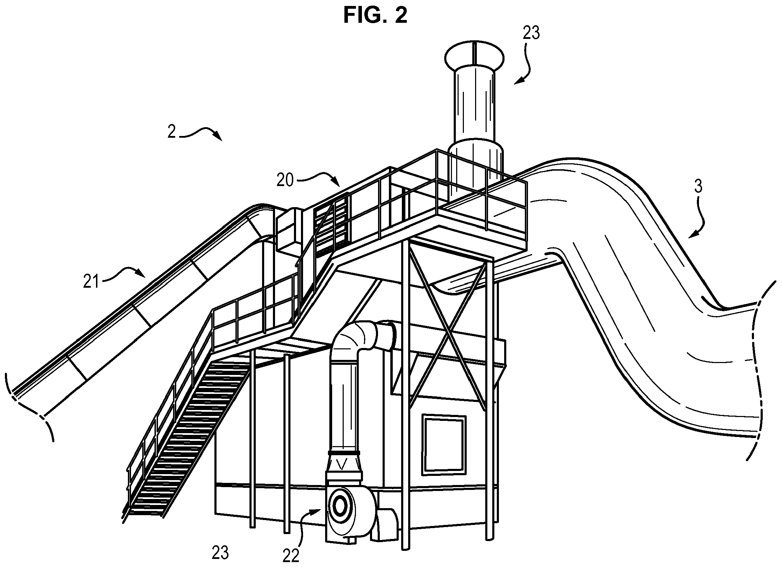

Un exemple de chaudière 2 particulièrement adaptée à la présente installation 1 est représenté par la **figure 2****.** Cette chaudière 2 comprend un foyer 20 dans lequel la biomasse est brulée, une rampe 21 d'amenée de cette dernière, un ventilateur d'air de combustion 22, le début du circuit d'évacuation des fumées 3, et surtout un diverteur 23.

Ce dernier est une sorte de soupape de sécurité thermique qui permet un échappement en cas de températures anormalement élevées dans les fumées (températures qui risqueraient d'endommager les échangeurs disposés sur le circuit d'évacuation des fumées 3, typiquement 1000°C). Contrairement au gaz ou d'autres hydrocarbures, la biomasse ne produit pas une température constante lors de sa combustion, et une régulation est nécessaire.

Ce diverteur 23 rend possible un fonctionnement de la chaudière dit « air chaud », dans lequel les fumées sont portées à très haute température (plus de 900°C). Cela est habituellement évité à cause du risque de surchauffe qui endommagerait l'installation.

La haute température est obtenue en limitant la quantité d'air frais apportée via le ventilateur 22.

On prendra dans la suite de la description l'exemple chiffré d'une installation 1 consommant environ une tonne et demie par heure de bois moyennement sec par heure, pour un PCI entrant de 5200 kW. La table 1 ci-dessous indique les PCI des principaux bois.

**Table 1**

| | | **Densité des bois** | | **PCI DES BOIS SUIVANT L'HUMIDITÉ SUR POIDS BRUT (kWh/t)** | | | | | | | | | | | | |
|---|---|---|---|---|---|---|---|---|---|---|---|---|---|---|---|---|
| Bois | Essences | vert | 15 à 20% d'H | Anhydr. | 10% | 15% | 20% | 25% | 30% | 35% | 40% | 45% | 50% | 55% | 60% | 65% |
| Résineux | Sapin Epicéa | 0,7/1 | 0,4/0,6 | 5310 | 4710 | 4410 | 4110 | 3810 | 3500 | 3200 | 2900 | 2610 | 2310 | 2010 | 1710 | 1400 |
| | Pin Mélèze | 0,7/0,9 | 0,5/0,7 | 5380 | 4770 | 4470 | 4470 | 3860 | 3550 | 3250 | 2950 | 2650 | 2340 | 2030 | 1740 | 1430 |
| Feuillus durs | Chène-Hêtre Châtaignier | 1/1,1 | 0,7/0,9 | 5080 | 4500 | 4210 | 3920 | 3630 | 3340 | 3050 | 2760 | 2480 | 2190 | 1900 | 1610 | 1320 |
| | Charme | 1/1,1 | 0,8/0,9 | 4940 | 4370 | 4100 | 3810 | 3530 | 3250 | 2960 | 2680 | 2400 | 2120 | 1830 | 1550 | 1280 |
| Feuillus tendres | Bouleau Aulne | 0,8/0,9 | 0,6/0,7 | 4970 | 4400 | 4110 | 3830 | 3550 | 3260 | 2980 | 2690 | 2410 | 2130 | 1860 | 1570 | 1280 |
| | Peuplier Tilleul | 0,8/0,9 | 0.4/0,6 | 4800 | 4250 | 3980 | 3700 | 3420 | 3140 | 2880 | 2600 | 2320 | 2050 | 1780 | 1510 | 1230 |

La chaudière 2 valorise cette biomasse sous forme de fumées à 970°C avec un débit de 12800 Nm³/h (un normo mètre cube correspond environ à 44.6 moles de gaz).

Un rendement de combustion excellent de 97% est obtenu.

### ORC

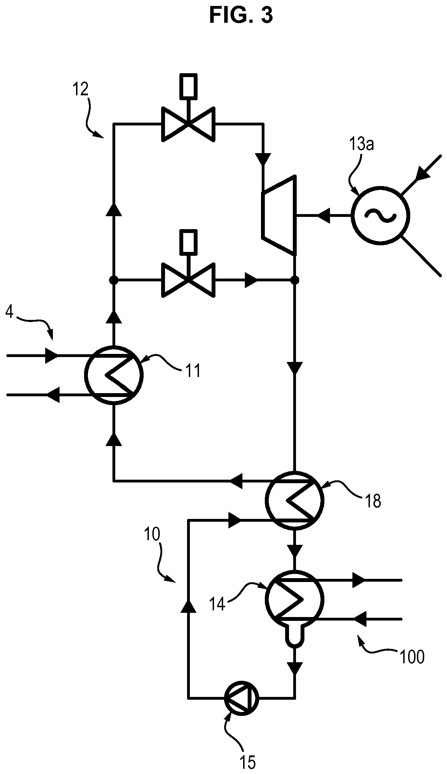

L'ensemble appelé improprement ORC englobe le circuit d'huile thermique 4 et le circuit de fluide caloporteur organique à changement d'état 10. Cet ORC est visible sur la **figure 3****.**

La différence entre les installations classiques et les ORC réside dans le choix du fluide caloporteur à changement d'état. Alors que les premières utilisent de l'eau/vapeur, les fluides utilisés pour les ORC sont des fluides organiques (toluène, siloxanes, etc.) qui ont la particularité de présenter une température d'ébullition maximale (point critique) sensiblement inférieure à celle de l'eau (377°C).

Cette valeur élevée fait qu'aux niveaux élevés de pression qui règnent dans les circuits de vapeur (parfois plus de 100 bars), la vapeur d'eau risque de se condenser dans une turbine (créant des gouttelettes projetées à haute vitesse qui peuvent endommager les aubes de la turbine), d'où le recours à de coûteux surchauffeurs de vapeur d'eau.

Les ORC permettent une détente à partir de la saturation qui laisse la vapeur en phase gazeuse, sans condenser, évitant ainsi les problèmes de gouttes, mais nécessitant pour un meilleur rendement de récupérer l'énergie sensible des gaz chauds après la détente pour préchauffer le fluide liquide qui sort du condenseur et doit être réchauffé avant d'être évaporé. Cela est accompli grâce au régénérateur 18 qui met en échange thermique les deux moitiés du circuit 10.

On distingue en outre sur la figure 3 les autres composants de l'ORC :
- un évaporateur 11 en échange thermique avec le circuit d'huile thermique 4 ;
- au moins une turbine principale 12 entraînant des moyens de génération d'électricité 13a ;
- un condenseur 14 ; et
- une pompe 15.

Il est à noter que les fluides organiques ORC sont inflammables et sous haute pression. Il est donc hors de question de les envoyer à proximité du foyer 20 de la chaudière 2 afin d'éviter tout risque d'explosion incendiaire, d'où le recours au circuit d'huile thermique 4 comme intermédiaire.

Ce dernier est en échange thermique avec le circuit d'évacuation des fumées 3 au niveau d'au moins un échangeur primaire 40 en amont du condenseur de fumées 31. On d'autres termes, la chaleur de combustion est d'abord transférée du circuit d'évacuation des fumées 3 au circuit d'huile thermique via l'échangeur primaire 40 (comme on verra plus loin il peut y avoir d'autres échangeurs primaires 41a, 41b, 41c), puis au circuit de fluide ORC 10 via l'évaporateur 11 au sein duquel le fluide ORC change d'état. L'huile thermique reste quant à elle toujours sous l'état liquide.

Par ailleurs, le condenseur 14 du circuit de fluide caloporteur organique 10 est avantageusement en échange thermique avec le circuit de valorisation d'eau chaude 100 en aval (selon le sens d'écoulement du circuit de valorisation d'eau chaude) du condenseur de fumées 31, c'est-à-dire après que ce même circuit de valorisation 100 d'eau chaude a récupéré la chaleur du circuit d'évacuation des fumées au niveau du condenseur de fumées 31.

Ainsi, de l'eau arrivant au condenseur de fumées 31 à une température de 40°C est typiquement préchauffée jusqu'à 52°C, avant d'être montée jusqu'à 80°C grâce à l'enthalpie récupérée lors de la condensation du fluide ORC. On note que 80°C est la température idéale pour une valorisation domestique de cette chaleur. La combinaison des deux condenseurs 31, 14 est donc très avantageuse.

### Turbine à air chaud

L'installation 1 comprend comme expliqué avant un circuit d'air 20 sur lequel sont disposés successivement un compresseur 201, au moins un échangeur secondaire 202a, 202b en échange thermique avec le circuit d'évacuation des fumées 3, et une turbine auxiliaire 203 entrainant également des moyens de génération d'électricité 13b (qui peuvent être les mêmes que les moyens de génération d'électricité 13a entrainés par la turbine principale 12). Il est à noter que le compresseur 201 peut lui aussi être entraîné par la turbine auxiliaire 203.

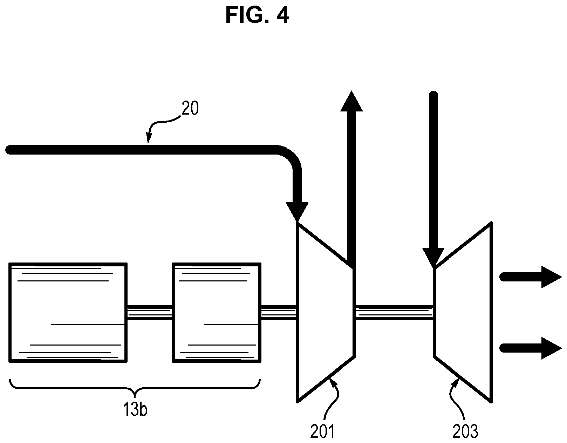

Un détail de l'ensemble associé est représenté sur la figure 4. Il présente un fonctionnement assez proche de celui d'un « turbo » de véhicule.

Le circuit d'air 20 est un circuit ouvert qui extrait de l'air de l'atmosphère avant de l'injecter dans le circuit d'évacuation des fumées 3 en aval de l'échangeur primaire 40 alimentant le circuit d'huile thermique 4.

Ainsi, le surplus de chaleur prélevé aux fumées est rendu. L'ensemble à air chaud ne crée donc quasiment aucune perte, tout en augmentant la production d'énergie électrique.

De façon préférée, les caractéristiques de l'ensemble à air chaud sont les suivantes :
1. Débit d'air: 3.60 kg/s
2. Température en sortie du compresseur 201 (température d'entrée de l'échangeur secondaire 202a, 202b): 340°C
3. Pression en sortie du compresseur 201 (pression à l'entrée de l'échangeur secondaire 202a, 202b) : 9.08 Bar
4. Pression à l'entrée de la turbine auxiliaire 203 : 8.60 Bar
5. Température à l'entrée de la turbine auxiliaire 203 (température en sortie de l'échangeur secondaire 202a, 202b) : 850°C (en supposant une température des fumées de 970°C en sortie de la chaudière 2)
6. Pression à la sortie de la turbine auxiliaire 203 : 1.013 Bar (Patm).

Il en ressort d'après les abaques une production électrique de 450 kWé. Par ailleurs, l'air injecté dans le circuit d'évacuation des fumées 3 présente une température de 450°C.

### Echangeurs de chaleur

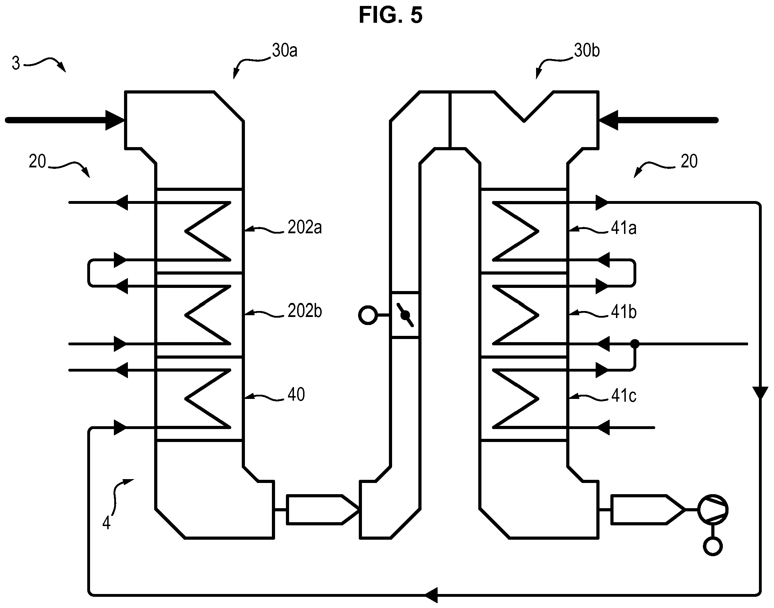

De façon préférée, le circuit d'évacuation des fumées 3 présente une disposition particulière prévue pour optimiser les niveaux des différents circuits de l'installation 1. Cette disposition est représentée par la figure 5, et comprend six échangeurs 202a, 202b, 40, 41a, 41b, 41c, disposés en deux colonnes 30a, 30b d'échange.

Les deux premiers de ces échangeurs sont deux échangeurs secondaires 202a, 202b montés en série, permettant le chauffage de l'air chaud pour la turbine auxiliaire 203 jusqu'à 850°C. Ce sont des échangeurs soumis aux plus fortes températures, et sont préférablement construits en alliages haute résistance.

Le troisième échangeur de cette première colonne 30a est l'échangeur primaire 40 évoqué précédemment, et plus particulièrement un échangeur primaire haute température.

En effet, dans la deuxième colonne 30b sont disposés trois échangeurs 41a, 41b, 41c, montés en série, qui sont des échangeurs primaires basse température. Ils permettent le préchauffage de l'huile thermique du circuit 4 avant sa montée maximale en température dans l'échangeur 40. Ils subissent moins de contraintes thermiques, et peuvent être réalisés par exemple en acier EN 10216-2. Contrairement à l'échangeur primaire haute température 40, ces échangeurs primaires basse température 41a, 41b, 41c sont disposés en aval du point de réinjection d'air chaud issu de la turbine auxiliaire 203, et peuvent donc valoriser la chaleur résiduelle de cet air chaud, à nouveau en vue d'une production d'électricité (via l'ORC). L'efficacité est donc optimale.

Il est à noter que les niveaux « haute température » et « basse température » sont seulement relatifs (ils permettent juste de distinguer les échangeurs primaires permettant la plus forte montée en température de ceux qui ne font qu'un préchauffage de l'huile), et ne limitent l'invention à aucune gamme de température en particulier.

Dans le présent exemple, l'huile thermique entre à 132°C dans les échangeurs primaires basse température 41a, 41b, 41c, en sort à 252°C avant traversée de l'échangeur primaire haute température 40, au sein duquel l'huile thermique est portée à 312°C.

En ce qui concerne les fumées de combustion, leur température chute de 970°C à 445°C en traversant la première colonne 30a. Au sommet de la deuxième colonne, l'air issu de l'ensemble à air chaud (à 450°C) est injecté et mélangé aux fumées. En sortie de tous les échangeurs primaires basse température 41a, 41b, 41c, les fumées ne sont plus qu'à 240°C.

On note que le point d'injection de l'air chaud est de sorte que ce dernier ne modifie pas sensiblement la température des fumées, mais augmente seulement leur volume, et les « dilue » (puisque cet air n'est pas un air de combustion et ne contient que très peu de poussières). Cela facilitera d'autant la récupération de chaleur via condensation.

En termes d'énergie, 3056 kWth de chaleur sont transmis au circuit d'huile thermique 4 via l'échangeur primaire haute température 40, et 283 kWth de chaleur sont transmis au circuit d'huile thermique 4 via les échangeurs primaires basse température 41a, 41b, 41c, pour un total de 3339 kWth transmis au circuit de fluide ORC 10 via l'évaporateur 11.

Sur ce total, 650 kW sont valorisés en électricité, et 2689 kW sont transmis au circuit de valorisation d'eau chaude 100 à 80°C.

### Condenseur de fumées

Les fumées en sortie de la deuxième colonne 30b possèdent encore une quantité élevée d'énergie valorisable (température de 240°C).

Avant qu'elles n'atteignent le condenseur de fumées 31, les fumées sont avantageusement traitées par des moyens de traitement des fumées 32 disposés sur le circuit d'évacuation des fumées 3.

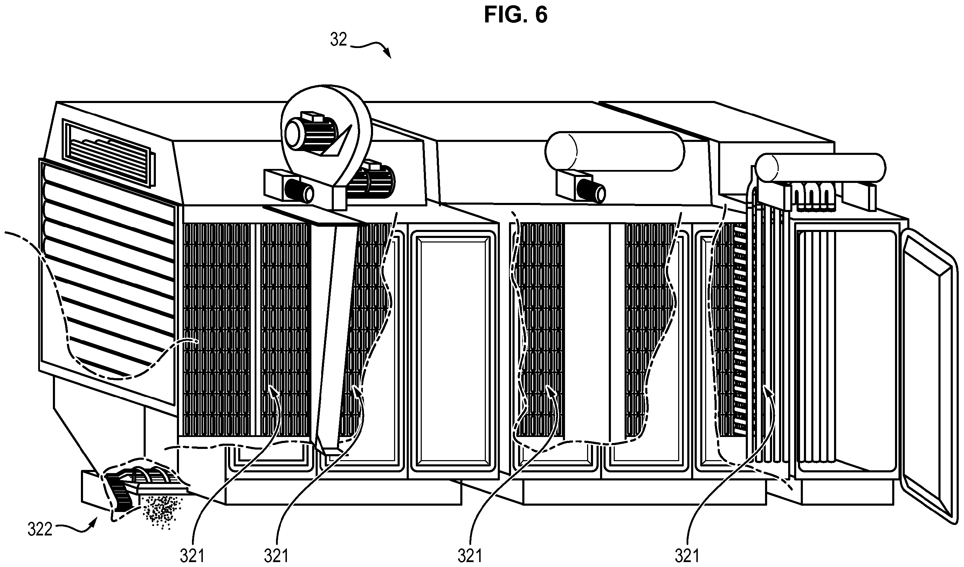

Un exemple de tels moyens de traitement des fumées 32 est représenté par la **figure 6****.** Il comprend des filtres à particules 321 (du type filtre à manche ou équivalent) qui élimine quasiment toutes les poussières des gaz de sorte à éviter de les rejeter à l'atmosphère mais surtout éviter toute pollution dans l'eau condensée ultérieurement (la Valeur Limite d'Exposition est de 10 mg de poussières/Nm3). Elles sont récupérées via des bacs 322.

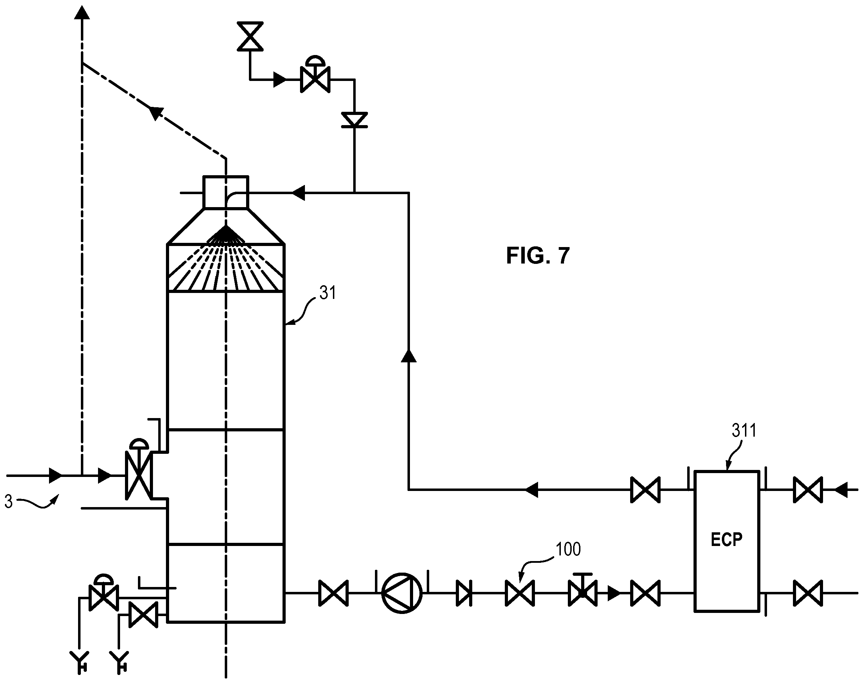

Les fumées traitées sont alors mises en contact avec une source froide pour condensation dans le condenseur 31. Comme l'on voit sur la **figure 7****,** le condenseur 31 prend typiquement la forme d'une cuve traversée de bas en haut par les fumées, au sein de laquelle les condensats, refroidis dans un échangeur 311 par l'eau du circuit de valorisation 100, sont pulvérisés. Les condensats sont collectés en partie basse à environ 60°C. L'échangeur 311 (sous la forme d'un échangeur à plaques) met en échange thermique l'eau « froide » du circuit 100 avec les condensats de sorte à améliorer la récupération d'énergie dans les fumées. Celles-ci sont évacuées à 60°C.

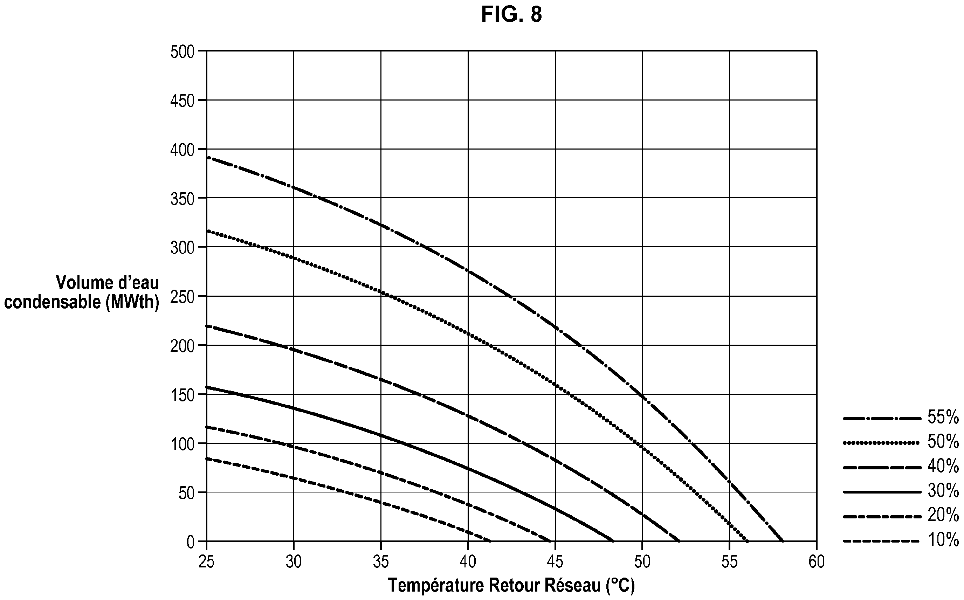

La **figure 8** représente le volume d'eau condensable par MWth en fonction de la température d'eau pulvérisée. Dans notre cas et pour une température de 45°C, le débit total d'eau condensée est d'environ 960L/h (cas de bois présentant une humidité d'environ 50%, soit 160L/h/MWth d'eau condensable).

Cette eau est parfaitement pure en MES (matières en suspension), puisque c'est de l'eau distillée, mais contient des gaz dissous, tels du CO2 et du H2SO4 (de l'ordre de quelques ppm). Ces gaz acidifient l'eau (pH d'environ 4.5), c'est pourquoi une neutralisation de cette eau (par exemple par percolation sur de la neutralité) est éventuellement réalisée en vue d'un usage domestique.

La chaleur récupérée via ce condenseur 31 est d'environ 1250kWth.

### Bilan

Les choix technologiques de l'installation 1 (en particulier les températures de travail exposées) permettent un rendement inégalé.

Il en ressort une efficacité énergétique telle qu'a minima :
A. Electricité : production de 450 kWé sur la turbine auxiliaire 203 et 650 kWé sur la turbine principale 12, soit un total de 1100 kWé.
B. Chaleur : production de 2 664 kWth au niveau du condenseur 14 de l'ORC et 1250 kWth sur le condenseur de fumées 31 soit au total 3914 kWhth.
C. Une auto-consommation de 32 kWé sur la pompe 15 de l'ORC, 50 kWé pour le compresseur d'air chaud 201, 40 kWé pour le fonctionnement chaudière 2 et 65 kWé pour la ventilation, soit au total 187 kWé.

Le rendement de l'installation 1 est donc de (1100+3914)/5200= 96,4%, et l'efficacité énergétique de l'installation 1 est ainsi (1100+3914-187)/5200=92,8%.

On note que le rendement électrique dépasse 21%, ce qui traduit l'efficacité de l'ensemble à air chaud.

### Procédé

Selon un deuxième aspect, l'invention concerne également un procédé de transfert thermique mis en oeuvre par l'installation 1 selon le premier aspect de l'invention.

Ce procédé comprend des étapes de :
- Récupération au niveau du circuit d'évacuation de fumées 3 de fumées de combustion (issues de la chaudière 2) à une température d'au moins 900°C,
- Chauffage à une température d'au moins 800°C d'air du circuit d'air 20 (provenant du compresseur 201 via lequel il est déjà porté à 340°C) en échange thermique avec le circuit d'évacuation des fumées 3 au niveau d'au moins un échangeur secondaire 202a, 202b ;
- Détente de l'air chaud du circuit d'air 20 dans une turbine auxiliaire 203 (de sorte à alimenter les moyens de génération électrique 13b) ;
- Réchauffage à une température d'au moins 300°C d'huile du circuit d'huile thermique 4 en échange thermique avec le circuit d'évacuation des fumées 3 au niveau d'au moins un échangeur primaire 40 en aval de l'au moins un échangeur secondaire 202a, 202b ;
- Injection de l'air en sortie de la turbine auxiliaire 203 dans le circuit d'évacuation des fumées 3 en en aval de l'au moins un échangeur primaire 40 ;
- Evaporation de fluide du circuit de fluide caloporteur organique à changement d'état 10 en échange thermique avec le circuit d'huile thermique 4 au niveau d'au moins un évaporateur 11 (de façon générale, on comprend qu'un cycle de Rankine est mis en oeuvre dans le circuit de fluide ORC 10 alimenté en chaleur via le circuit d'huile thermique 4) ;
- Détente du fluide gazeux du circuit de fluide caloporteur organique 10 dans une turbine principale 12 (de sorte à alimenter les moyens de génération électrique 13a) ;
- Condensation des fumées du circuit d'évacuation des fumées 3 au niveau d'un condenseur de fumées 31 en échange thermique avec un circuit de valorisation d'eau chaude 100 (apportant de l'eau à une température d'environ 45°C) ;
- Et après cette condensation, avantageusement condensation du fluide gazeux du circuit de fluide caloporteur organique 10 au niveau d'un condenseur 14 en échange thermique avec le circuit de valorisation d'eau chaude 100 en aval du condenseur de fumées 31, en d'autres termes après que le circuit de valorisation 100 a récupéré la chaleur de circuit d'évacuation des fumées 3 (cela permet comme expliqué de mettre en oeuvre le cycle de Rankine tout en valorisant la chaleur libérée via le circuit de valorisation d'eau chaude 100, au niveau de température optimal de 80°C)

Comme expliqué précédemment, des échangeurs primaires basse température 41a, 41b, 41c peuvent être disposés sur le circuit d'évacuation des fumées 3 en aval du point d'injection de l'air en sortie de la turbine auxiliaire 203 de façon à mettre en oeuvre une étape de préchauffage (à une température d'environ 250°C) de l'huile du circuit d'huile thermique 4 en utilisant la chaleur résiduelle de l'air turbiné.

## Revendications

1. Installation thermique (1) de combustion de biomasse comprenant :
- une chaudière (2),
- un circuit d'évacuation des fumées (3) en échange thermique avec un circuit de valorisation d'eau chaude (100) au niveau d'un condenseur de fumées (31) ;
- un circuit d'huile thermique (4) en échange thermique avec le circuit d'évacuation des fumées (3) au niveau d'au moins un échangeur primaire (40) en amont du condenseur de fumées (31) ;
- un circuit de fluide caloporteur organique à changement d'état (10) sur lequel sont disposés successivement :
∘ un évaporateur (11) en échange thermique avec le circuit d'huile thermique (4) ;
∘ au moins une turbine principale (12) entraînant des moyens de génération d'électricité (13a) ;
∘ un condenseur (14) ; et
∘ une pompe (15) ;
l'installation étant **caractérisée en ce qu'**elle comprend en outre un circuit d'air (20) sur lequel sont disposés successivement :
- un compresseur (201) ;
- au moins un échangeur secondaire (202a, 202b) en échange thermique avec le circuit d'évacuation des fumées (4) en amont dudit échangeur primaire (40) ;
- une turbine auxiliaire (203) entrainant également des moyens de génération d'électricité (13b) ;
l'air en sortie de la turbine auxiliaire (203) étant injecté dans le circuit d'évacuation des fumées (3) en aval dudit échangeur primaire (40).

2. Installation selon la revendication 1, dans lequel le condenseur (14) met en échange thermique le circuit de fluide caloporteur organique (10) avec le circuit de valorisation d'eau chaude (100) en aval du condenseur de fumées (31) selon le circuit de valorisation d'eau chaude (100).

3. Installation selon l'une des revendications 1 et 2, dans lequel ledit échangeur primaire (40) est un échangeur haute température, le circuit d'huile thermique (4) étant en outre en échange thermique avec le circuit d'évacuation des fumées (3) au niveau d'au moins un échangeur primaire basse température (41a, 41b, 41c) via lequel l'huile thermique est préchauffée avant de circuler dans l'échangeur primaire haute température (40), l'air en sortie de la turbine auxiliaire (203) étant injecté dans le circuit d'évacuation des fumées (3) en amont de l'au moins un échangeur primaire basse température (41a, 41b, 41c).

4. Installation selon la revendication 3, dans lequel le circuit d'évacuation des fumées (3) comprend successivement une première colonne (30a) et une deuxième colonne (30b), les fumées en sortie de la chaudière (2) étant injectées au sommet de la première colonne (30a), l'air en sortie de la turbine auxiliaire (203) étant injecté au niveau du sommet de la deuxième colonne (30b), l'au moins un échangeur secondaire (202a, 202b) et l'échangeur primaire haute température (40) étant disposés dans la première colonne (30a), et les échangeurs primaires basse température (41, 41b, 41c) étant disposés dans la deuxième colonne (30b).

5. Installation selon l'une des revendications 3 et 4, comprenant deux échangeurs secondaires (202a, 202b) montés en série, et trois échangeurs primaires basse température (41a, 41 b, 41c) montés en série.

6. Installation selon l'une des revendications 1 à 5, dans lequel des moyens de traitement des fumées (32) sont disposés sur le circuit d'évacuation des fumées (3) en entrée du condenseur de fumées (31).

7. Installation selon la revendication 6, dans lequel le condenseur de fumées (31) comprend un conduit dans lequel les condensats sont refroidis par échange thermique avec l'eau du circuit de valorisation (100), et pulvérisés au contact des fumées traitées.

8. Installation selon l'une des revendications précédentes, dans lequel la chaudière (2) comprend un diverteur (23) configuré pour permettre un échappement en cas de température des fumées en sortie de chaudière localement supérieure à la température maximale admissible en entrée des dits échageurs secondaires (202a, 202b), typiquement 1000°C, et un ventilateur d'air de combustion (22) configuré pour que les fumées en sortie de la chaudière présentent une température d'au moins 900°C.

9. Installation selon la revendication 8, dans lequel le compresseur (201) et l'au moins un échangeur secondaire (202a, 202b) sont configurés pour porter l'air chaud du circuit (20) à une température d'au moins 800°C.

10. Installation selon l'une des revendications précédentes, dans lequel l'eau du circuit de valorisation d'eau chaude (100) présente une température inférieure à 50°C en entrée du condenseur de fumées (31).

11. Installation selon l'une des revendications précédentes, configurée pour une production électrique d'une puissance inférieure à 3 MWé.

12. Procédé de transfert thermique mis en oeuvre par une installation thermique (1) de combustion de biomasse, le procédé étant **caractérisé en ce qu'**il comprend des étapes de :
- Récupération au niveau d'un circuit d'évacuation de fumées (3) de fumées de combustion à une température d'au moins 900°C,
- Chauffage à une température d'au moins 800°C d'air d'un circuit d'air (20) en échange thermique avec le circuit d'évacuation des fumées (3) au niveau d'au moins un échangeur secondaire (202a, 202b) ;
- Détente de l'air chaud du circuit d'air (20) dans une turbine auxiliaire (203) ;
- Chauffage à une température d'au moins 300°C d'huile d'un circuit d'huile thermique (4) en échange thermique avec le circuit d'évacuation des fumées (3) au niveau d'au moins un échangeur primaire (40) en aval de l'au moins un échangeur secondaire (202a, 202b) ;
- Injection de l'air en sortie de la turbine auxiliaire (203) dans le circuit d'évacuation des fumées (3) en en aval de l'au moins un échangeur primaire (40) ;
- Evaporation de fluide d'un circuit de fluide caloporteur organique à changement d'état (10) en échange thermique avec le circuit d'huile thermique (4) au niveau d'au moins un évaporateur (11) ;
- Détente du fluide gazeux du circuit de fluide caloporteur organique (10) dans une turbine principale (12) ;
- Condensation des fumées du circuit d'évacuation des fumées (3) au niveau d'un condenseur de fumées (31) en échange thermique avec un circuit de valorisation d'eau chaude (100).

13. Procédé selon la revendication 12, comprenant en outre une étape de :
- Condensation du fluide gazeux du circuit de fluide caloporteur organique (10) au niveau d'un condenseur (14) en échange thermique avec le circuit de valorisation d'eau chaude (100) après condensation des fumées du circuit d'évacuation des fumées (3) au niveau du condenseur de fumées (31).

## Patentansprüche

1. Kraft-Wärmeanlage (1) zur Biomasseverbrennung, die Folgendes umfasst:
- einen Kessel (2),
- einen Rauchabzugskreislauf (3) im Wärmetausch mit einem Heißwasserrückgewinnungskreislauf (100) in einem Rauchkondensator (31);
- einen Thermoölkreislauf (4) im Wärmetausch mit dem Rauchabzugskreislauf (3) in zumindest einem Primärtauscher (40) oberstromig vom Rauchkondensator (31);
- einen organischen Wärmeträgerflüssigkeitskreislauf mit Zustandsänderung (10), auf dem nacheinander angeordnet sind:
∘ ein Verdampfer (11) im Wärmetausch mit dem Thermoölkreislauf (4);
∘ zumindest eine Hauptturbine (12), die die Elektrizitätserzeugungsmittel (13a) antreibt;
∘ ein Kondensator (14); und
∘ eine Pumpe (15);
wobei die Anlage **dadurch gekennzeichnet ist, dass** sie ferner einen Luftkreislauf (20) umfasst, auf dem nacheinander angeordnet sind:
- ein Verdichter (201);
- zumindest ein Sekundärtauscher (202a, 202b) im Wärmetausch mit dem Rauchabzugskreislauf (3) oberstromig vom Primärtauscher (40);
- eine Hilfsturbine (203), die auch Elektrizitätserzeugungsmittel (13b) antreibt;
wobei die Luft am Austritt der Hilfsturbine (203) in den Rauchabzugskreislauf (3) unterstromig vom Primärtauscher (40) eingeführt wird.

2. Anlage nach Anspruch 1, wobei der Kondensator (14) den organischen Wärmeträgerflüssigkeitskreislauf (10) mit dem Heißwasserrückgewinnungskreislauf (100) unterstromig vom Rauchkondensator (31) gemäß dem Heißwasserrückgewinnungskreislauf (100) in den Wärmetausch bringt.

3. Anlage nach einem der vorstehenden Ansprüche 1 und 2, wobei der Primärtauscher (40) ein Hochtemperaturtauscher ist, wobei der Thermoölkreislauf (4) ferner im Wärmetausch mit dem Rauchabzugskreislauf (3) in zumindest einem Niedertemperatur-Primärtauscher (41a, 41b, 41c) steht, über den das Thermoöl vorgeheizt wird, bevor es im Hochtemperatur-Primärtauscher (40) zirkuliert, wobei die Luft am Austritt der Hilfsturbine (203) in den Rauchabzugskreislauf (3) oberstromig von der zumindest einem Niedertemperatur-Primärtauscher (41a, 41b, 41c) eingeführt wird.

4. Anlage nach Anspruch 3, wobei der Rauchabzugskreislauf (3) nacheinander einen ersten Abzug (30a) und einen zweiten Abzug (30b) umfasst, der Rauch am Austritt des Kessels (2) oben in den ersten Abzug (30a) eingeführt wird, die Luft am Austritt der Hilfsturbine (203) oben in den zweiten Abzug (30b) eingeführt wird, der zumindest eine Sekundärtauscher (202a, 202b) und der Hochtemperatur-Primärtauscher (40) im ersten Abzug (30a) angeordnet sind und die Niedertemperatur-Primärtauscher (41, 41b, 41c) im zweiten Abzug (30b) angeordnet sind.

5. Anlage nach einem beliebigen der vorstehenden Ansprüche 3 und 4, die zwei Sekundärtauscher (202a, 202b) umfasst, die in Serie montiert sind, und drei Niedertemperatur-Primärtauscher (41a, 41b, 41c), die in Serie montiert sind.

6. Anlage nach einem beliebigen der vorstehenden Ansprüche 1 bis 5, wobei Rauchbehandlungsmittel (32) auf dem Rauchabzugskreislauf (3) am Eintritt des Rauchkondensators (31) angeordnet sind.

7. Anlage nach Anspruch 6, wobei der Rauchkondensator (31) ein Rohr umfasst, in dem das Kondensat durch Wärmetausch mit dem Wasser des Rückgewinnungskreislaufs (100) gekühlt und bei Kontakt mit dem behandelten Rauch zerstäubt wird.

8. Anlage nach einem beliebigen der vorstehenden Ansprüche, wobei der Kessel (2) einen Divertor (23) umfasst, der so konfiguriert ist, dass er einen Auspuff ermöglicht, wenn die Temperatur des Rauchs am Austritt des Kessels örtlich über der am Eintritt der Sekundärtauscher (202a, 202b) zulässigen Höchsttemperatur liegt, im typischen Fall 1000 °C, und ein Verbrennungsluftgebläse (22), das so konfiguriert ist, dass der Rauch am Austritt des Kessels eine Temperatur von mindestens 900 °C aufweist.

9. Anlage nach Anspruch 8, wobei der Verdichter (201) und der zumindest eine Sekundärtauscher (202a, 202b) so konfiguriert sind, dass die heiße Luft des Kreislaufs (20) auf eine Temperatur von mindestens 800 °C gebracht wird.

10. Anlage nach einem beliebigen der vorstehenden Ansprüche, wobei das Wasser des Rückgewinnungskreislaufs (100) am Eintritt des Rauchkondensators (31) eine Temperatur von unter 50 °C aufweist.

11. Anlage nach einem beliebigen der vorstehenden Ansprüche, die für eine Erzeugung von elektrischer Energie mit einer Leistung von unter 3 MWe konfiguriert ist.

12. Verfahren zum Wärmetransfer durch eine Kraft-Wärmeanlage zur Biomasseverbrennung (1), wobei das Verfahren **dadurch gekennzeichnet ist, dass** es die folgenden Schritte umfasst:
- Rückgewinnung von Verbrennungsrauch in einem Rauchabzugskreislauf (3) bei einer Temperatur von mindestens 900 °C,
- Heizung eines Luftkreislaufs (20) auf eine Temperatur von mindestens 800 °C im Wärmetausch mit dem Rauchabzugskreislauf (3) in zumindest einem Sekundärtauscher (202a, 202b);
- Entspannung der Heißluft des Luftkreislaufs (20) in einer Hilfsturbine (203);
- Heizung eines Thermoölkreislaufs (4) auf eine Temperatur von mindestens 300 °C im Wärmetausch mit dem Rauchabzugskreislauf (3) in zumindest einem Primärtauscher (40) unterstromig vom der zumindest einen Sekundärtauscher (202a, 202b);
- Einführung der Luft am Austritt der Hilfsturbine (203) in den Rauchabzugskreislauf (3) unterstromig vom der zumindest einen Primärtauscher (40);
- Verdampfung von Flüssigkeit eines organischen Wärmeträgerflüssigkeitskreislaufs mit Zustandsänderung (10) im Wärmeaustausch mit dem Thermoölkreislauf (4) in zumindest einem Verdampfer (11);
- Entspannung der gashaltigen Flüssigkeit des organischen Wärmeträgerflüssigkeitskreislaufs (10) in einer Hauptturbine (12);
- Kondensation des Rauchs des Rauchabzugskreislaufs (3) in einem Rauchkondensator (31) im Wärmetausch mit einem Heißwasserrückgewinnungskreislauf (100).

13. Verfahren nach Anspruch 12, das ferner folgenden Schritt umfasst:
- Kondensation der gashaltigen Flüssigkeit des organischen Wärmeträgerflüssigkeitskreislaufs (10) in einem Kondensator (14) im Wärmetausch mit dem Heißwasserrückgewinnungskreislauf (100) nach der Kondensation des Rauchs des Rauchabzugskreislaufs (3) im Rauchkondensator (31).

## Claims

1. A biomass combustion thermal installation (1) comprising:
- a boiler (2),
- a flue gas discharge circuit (3) exchanging heat with a hot water upgrading circuit (100) at a flue-gas condenser (31);
- a thermal oil circuit (4) exchanging heat with the flue gas discharge circuit (3) at one primary exchanger (40) at least, upstream of the flue-gas condenser (31);
- a phase-change organic heat transfer fluid circuit (10) on which are arranged in succession:
∘ an evaporator (11) exchanging heat with the thermal oil circuit (4);
∘ at least one main turbine (12) driving electrical generating means (13a);
∘ a condenser (14); and
∘ a pump (15);
the installation being **characterized in that** it further comprises an air circuit (20) on which are arranged in succession:
- a compressor (201);
- at least one secondary exchanger (202a, 202b) exchanging heat with the flue gas discharge circuit (3) upstream of said primary exchanger (40) ;
- an auxiliary turbine (203) also driving electrical generating means (13b);
the air at the outlet of the auxiliary turbine (203) being injected into the flue gas discharge circuit (3) downstream of said primary exchanger (40).

2. The installation according to claim 1, wherein the condenser (14) puts the organic heat-transfer fluid circuit (10) into heat exchange with the hot water upgrading circuit (100) downstream of the flue-gas condenser (31) along the hot-water upgrading circuit (100).

3. The installation according to one of claims 1 and 2, wherein said primary exchanger (40) is a high-temperature exchanger, the thermal oil circuit (4) further exchanging heat with the flue gas discharge circuit (3) at one primary low temperature exchanger (41a, 41b, 41c) at least, through which the thermal oil is pre-heated before circulating in the primary high temperature exchanger (40), the air at the outlet of the auxiliary turbine (203) being injected into the flue gas discharge circuit (3) upstream of the at least one primary low temperature exchanger (41a, 41b, 41c).

4. The installation according to claim 3, wherein the flue gas discharge circuit (3) comprises in succession a first column (30a) and a second column (30b), the flue gas at the outlet of the boiler (2) being injected at the top of the first column (30a), the air at the outlet of the auxiliary turbine (203) being injected at the top of the second column (30b), the at least one secondary exchanger (202a, 202b) and the primary high temperature exchanger (40) being arranged in the first column (30a) and the primary low temperature exchangers (41, 41b, 41c) being arranged in the second column (30b).

5. The installation according to one of claim 3 and 4, comprising two secondary exchangers (202a, 202b) assembled in series, and three primary low temperature exchangers (41a, 41b, 41c) assembled in series.

6. The installation according to one of claims 1 to 5, wherein flue gas treatment means (32) are arranged on the flue gas discharge circuit (3) at the inlet of the flue-gas condenser (31).

7. The installation according to claim 6, wherein the flue-gas condenser (31) comprises a duct in which the condensates are cooled by heat exchange with the water of the upgrading circuit (100), and sprayed in contact with the treated flue gas.

8. The installation according to one of the preceding claims, wherein the boiler (2) comprises a diverter (23) configured to allow exhaust in the case of a flue gas temperature at the outlet of the boiler locally greater than the maximum permissible temperature at the inlet of said secondary exchangers (202a, 202b), typically 1000°C, and a combustion air fan (22) configured so that the flue gas at the outlet of the boiler have a temperature of at least 900°C.

9. The installation according to claim 8, wherein the compressor (201) and the at least one secondary exchanger (202a, 202b) are configured to bring the hot air of the circuit (20) to a temperature of at least 800°C.

10. The installation according to one of the preceding claims, wherein the water of the hot water upgrading circuit (100) has a temperature below 50°C at the inlet to the flue-gas condenser (31).

11. The installation according to one of the preceding claims, configured for electricity production with a power less than 3 MWe.

12. A heat exchange method implemented by a biomass combustion thermal installation (1), the method being **characterized in that** it comprises steps of:
- Recovery, at a flue gas discharge circuit (3) of combustion flue gases at a temperature of at least 900°C,
- Heating the air of an air circuit (20) to a temperature of at least 800°C exchanging heat with the flue gas discharge circuit (3) at one secondary heat exchanger (202a, 202b) at least;
- Expansion of the hot air of the air circuit (20) in an auxiliary turbine (203);
- Heating the oil of a thermal oil circuit (4) to a temperature of at least 300°C, exchanging heat with the flue gas discharge circuit (3) at one primary exchanger (40) at least, downstream of the at least one secondary exchanger (202a, 202b);
- Injection of the air at the outlet of the auxiliary turbine (203) into the flue gas discharge circuit (3) downstream of the at least one primary exchanger (40);
- Evaporation of fluid of a phase-change organic heat transfer fluid circuit (10) exchanging heat with the thermal oil circuit (4) at one evaporator (11) at least;
- Expansion of the gaseous fluid of the phase-change organic heat transfer fluid circuit (10) in a main turbine (12);
- Condensation of the flue gases of the flue gas discharge circuit (3) at a flue-gas condenser (31) exchanging heat with a hot water upgrading circuit (100).

13. The method according to claim 12, further comprising a step of:
- Condensation of the gaseous fluid of the phase-change organic heat transfer fluid circuit (10) at a condenser (14) exchanging heat with the hot water upgrading circuit (100) after condensation of the flue gases of the flue gas discharge circuit (3) at the flue-gas condenser (31).
